# EUROPEAN PATENT SPECIFICATION

(11) **EP 4 089 578 B1**
(45) Date of publication and mention of the grant of the patent: **29.04.2026**
(21) Application number: 21382445.1
(22) Date of filing: 13.05.2021
(51) Int. Cl.: G06V 10/75, G06V 10/143, G06V 10/46, G06V 10/70

(54) **METHOD TO EXTRACT LOCAL THERMAL FEATURES OF JOINT INFLAMMATION IN THERMAL IMAGING, AND DEVICE IMPLEMENTING SUCH A METHOD**
VERFAHREN ZUR EXTRAKTION LOKALER THERMISCHER MERKMALE VON GELENKENTZÜNDUNGEN BEI DER THERMISCHEN BILDGEBUNG UND VORRICHTUNG ZUR DURCHFÜHRUNG SOLCH EINES VERFAHRENS
PROCÉDÉ D'EXTRACTION DES CARACTÉRISTIQUES THERMIQUES LOCALES D'UNE INFLAMMATION ARTICULAIRE EN IMAGERIE THERMIQUE ET DISPOSITIF METTANT EN UVRE UN TEL PROCÉDÉ

(43) Date of publication of application: 16.11.2022
(73) Proprietor: Singularity Biomed, S.L., 08174 Sant Cugat del Vallès Barcelona (ES)
(72) Inventor: MARÍN LÓPEZ, Manuel Alejandro, 08174 Sant Cugat del Vallès (Barcelona) (ES)
(74) Representative: TRBL Intellectual Property

(56) References cited:
- US-B2- 9 289 160
- OLIVER FAUST ET AL: "Application of infrared thermography in computer aided diagnosis", INFRARED PHYSICS AND TECHNOLOGY., vol. 66, 1 September 2014 (2014-09-01), GB, pages 160 - 175, XP055611004, ISSN: 1350-4495, DOI: 10.1016/j.infrared.2014.06.001
- SINGH JASPREET ET AL: "Automated approaches for ROIs extraction in medical thermography: a review and future directions", MULTIMEDIA TOOLS AND APPLICATIONS, KLUWER ACADEMIC PUBLISHERS, BOSTON, US, vol. 79, no. 21-22, 9 January 2019 (2019-01-09), pages 15273 - 15296, XP037156185, ISSN: 1380-7501, [retrieved on 20190109], DOI: 10.1007/S11042-018-7113-Z

## Description

### FIELD OF THE INVENTION

The present invention generally relates to the field of image processing and analysis, and more particularly, to the field of thermography devoted to identifying local thermal features in thermal images containing information on the degree of inflammation of the joints, which can be used for an assessment of the degree of disease activity and joint inflammation in patients with arthritis. The invention also relates to a device implementing such method. It is useful especially in the area of so-called point-of-care testing and remote patient monitoring.

### BACKGROUND OF THE INVENTION

Rheumatoid arthritis is a chronic inflammatory disease that without proper control causes pain, irreversible joint damage (mainly in the hands and feet) and significant disability. Early diagnosis and close monitoring of the patient is essential for the adoption of adequate therapeutic decisions.

The assessment of the degree of disease activity is frequently performed at medical visits by the physical examination of the joints, thereby determining the tender joint count (TJC) and swollen joint count (SJC), the symptoms explained by the patient, including an assessment of pain on a visual analogue scale (VAS) and by the determination of laboratory variables (acute phase reactants) such as C-reactive protein (CRP) and erythrocyte sedimentation rate (ESR). Some of the aforementioned variables (TJC, SJC, VAS, CRP, ESR) may be combined to obtain composite activity indices like Disease Activity Score 28 (DAS28), Clinical Disease Activity Index (CDAI) and Simplified Disease Activity Index (SDAI), among others. In addition to this, certain imaging techniques such as nuclear magnetic resonance or ultrasound are also used to detect the degree of joint inflammation with greater sensitivity and accuracy.

In the field of medical imaging, it is well known the infrared (IR) thermography, which enables the measurement of temperature at the distance without physical contact with the sample under test (i.e., a tissue). This technique works by capturing the intensity of far infrared radiation emitted by bodies, which depends on the temperature of the object (the hotter the object, the more infrared radiation it emits). By using thermographic cameras, the radiated energy, which is invisible to the human eye, can be transformed into a visible image comprising information about the surface temperature of the objects captured by the camera. In fact, a new generation of affordable uncooled thermal detectors (based on microbolometers) has recently been developed that, at the same time, provide good image quality.

IR imaging is thus a fast, contact-free, non-invasive, and passive imaging technique that can be implemented for various and distinct tasks. For instance, in patent US 9,289,160 B2 it is disclosed a device for the authentication and identification of a person based on his/her near-infrared (NIR) hand vein-pattern. IR imaging has also the potential to become a relevant image technique in medicine and, more particularly, in the evaluation of arthritis, since inflammation has the potential to alter the heat patterns of the affected body region.

With regard to the field of rheumatology, thermography has been used to detect arthritis for the past century. However, it soon fell into disuse due to the technical limitations of the time: low resolution of the cameras, large volume of sensors, and the limited computing power of computers. Nevertheless, thanks to the advancement of technology, in the last decade infrared thermography has once again experienced a heyday in applications for the evaluation of joint inflammatory activity.

Particularly, it has been anticipated the use of thermography in animal models for the assessment of arthritis, for instance, in Brenner et al. ["Thermal signature analysis as a novel method for evaluating inflammatory arthritis activity", Ann. Rheum. Dis., 2006 Mar; 65(3):306-11], it has been found a correlation between the ankle thermal measurements and the arthritis activity and severity in rat models. Moreover, in Sanchez et al. ["Use of a portable thermal imaging unit as a rapid, quantitative method of evaluating inflammation and experimental arthritis", J. Pharmacol. Toxicol. Methods, 2008 May; 57(3):169-75], the thermal analysis of rat paws in the arthritis model demonstrated a significant increase in the mean temperature difference between the inflamed and contralateral control paw. Indomethacin significantly decreased the mean temperature difference in treated animals as compared to control.

Moreover, it is known the use of thermography in human evaluation of arthritis. For instance, in Spalding et al. ["Three-dimensional and thermal surface imaging produces reliable measures of joint shape and temperature: a potential tool for quantifying arthritis", Arthritis Res. Ther., 2008, 10(1): R10] significant differences in the Heat Distribution Index (twice the SD of all temperatures within the region of interest [ROI]) were observed between patients with arthritis and controls. Two ROIs were considered: a box containing the wrist and a box containing the metacarpalphalangeal joints. Furthermore, Tan et al. ["Thermography in rheumatoid arthritis: a comparison with ultrasonography and clinical joint assessment", Clin. Radiol. 2020 Dec; 75(11): 963.e17-963.e22] studied arthritis by using ultrasonography, thereby obtaining a clear relationship between higher inflammation and a rise in temperature in the selected ROIs. In this study, ROIs were selected manually using a rectangular box placed over each anatomical site (i.e., at the wrists, metacarpophalangeal joints, thumb interphalangeal joints, and proximal interphalangeal joints of both hands). Even more, in Gatt et al. ["A comparison of thermographic characteristics of the hands and wrists of rheumatoid arthritis patients and healthy controls", Sci. Rep., 2019 Nov, 25; 9(1):17204] it has been demonstrated that a higher average temperature is measured in ROIs (fingers and palm) from rheumatoid arthritis patients in comparison with healthy patients, even without active inflammation. These findings provide evidence that baseline thermal patterns in rheumatoid arthritis patients differ significantly from healthy individuals. In addition to this, these findings also suggest that thermal patterns may extend to other regions of the body, not only the anatomical sites of the joints, such as palm and fingers.

Computational techniques have also contributed to arthritis evaluation. For example, k-means clustering has been applied in Snekhalatha et al. ["Automated hand thermal image segmentation and feature extraction in the evaluation of rheumatoid arthritis", Proc. Inst. Mech. Eng. H., 2015 Apr; 229 (4):319-31] to perform a thermal image segmentation and feature extraction in hand thermal images. In general, the features extracted and temperature measurements have higher values in rheumatoid arthritis patients compared to controls. The features extracted in this work are descriptive statistic values, for instance, the mean, standard deviation, kurtosis and entropy, among others, obtained from a HSV (Hue, Saturation, Value) thermal image.

A general review on infrared thermography is O. Faust et al., ["Application of infrared thermography in computer aided diagnosis" (Infrared Physics and Technology, vo. 66, 1 sept. 2014, pages 160-175)]. This method refers to the possibility of extracting feature sets from pre-processed thermal images. However, this document is silent about specific applications to obtain a patient's joint inflammation score of a body present in thermal images through ROI extraction.

The reference S. Jaspreet et al., ["Automated approaches for ROIs extraction in medical thermography: a review and future directions" (Multimedia Tools and Applications, Kluwer Ac. Pub., vol. 79, no. 21-22, 2019)] discloses several techniques of ROI extraction applied to medical thermography. However, this document only distinguishes between three kinds of ROIs: the entire region of the thermal image, specific anatomical regions where the inflammation occurs, or the hottest or coldest places on the image ("disease area"). This document also remarks the fuzzy nature of thermograms, which makes the automatic segmentation a challenging task, and remarks that, so far, no study has proposed the proper automatic segmentation of phalanges and metacarpal joints.

As can be observed in the previous references, different algorithms disclosed therein for arthritis assessment from thermal images always comprise these steps:
a) Image segmentation in order to obtain Regions of Interest (ROls) potentially containing information regarding undergoing inflammatory process: These ROls generally coincide with the anatomical sites of the image that contains one or more joints, but not always. For example, in Snekhalatha et al., from each HSV image three-pixel clusters were calculated, each one containing a portion of the image. Then, the cluster with the highest temperature is chosen as the ROI that is analysed (whole hand ROI).
b) Feature extraction from the previous ROIs to determine whether or not arthritis is present. Generally, these features are descriptive statistic values (like standard deviation and mean temperature values). These statistical features can be combined to calculate the degree of inflammation.

However, the extracted features observed in the previous references are only of descriptive statistical nature, thereby neglecting the possibility of using more advanced thermal patterns, which may improve the arthritis assessment. In this way, there is a need in the field of thermography and arthritis evaluation to obtain a method providing a better image segmentation and feature extraction. Consequently, more complex thermal features are required to obtain a more accurate and complete characterization of the inflammation.

### SUMMARY OF THE INVENTION

Contrary to other known alternatives in the literature, the present invention overcomes the aforementioned limitations and provides an arthritis assessment based on more complex local thermal features extracted from thermal images. The use of the invention is not limited to rheumatoid arthritis, but it can be also applied to other diseases like psoriatic arthritis and microcrystalline arthritis.

Indeed, the invention is aimed at providing with a device and method, as presented in the appended claims, for not merely detecting the joint inflammation but also quantifying it via thermal imaging. In rheumatoid arthritis (as it also occurs in other arthritis variants), the inflammation occurs with differences in thermal patterns and, therefore, the presence of joint inflammation produces an augmentation in the emission of infrared radiation that can be detected with an image acquisition sensor, like a thermal camera. Advantageously, infrared thermography is a fast, inexpensive, patient-friendly, and non-invasive technique that can be used for remote patient monitoring.

The invention mainly refers to a machine learning based method comprising an algorithm that determines, from a thermal image of a body region (e.g., the hands of a certain subject), the degree of joint inflammation. Advantageously, the thermal image obtained with an IR camera, which serves as input information for the method, does not necessarily comprise a temperature distribution unlike the input information required by other techniques, as some of the ones summarized in the background section. Absolute temperatures require high-end, precise and calibrated cameras. In this way, this method avoids the need of obtaining the absolute temperature distribution of the image to determine the inflammation severity.

The general object of the invention relates to a method and a device as set out in the appended set of claims.

A first object of the invention relates to a method wherein one or more local regions of interest of the thermal image are defined, which are selected to have highly distinctive patterns, which potentially contain information about the inflammation process of a body region (i.e., hands or feet of a human subject). In this way, a plurality of regions (further referred to as regions of interest and abbreviated as ROIs) is obtained from the thermal image. Note that the ROIs provide, in a more reduced dataset in comparison with the original thermal image, all the information required by the method of the invention to fully characterize the inflammation process.

The first object of the invention relates also to an automatable method to obtain a patient's joint inflammation score of a body from thermal images, said method comprising the following steps:
- acquiring one or more input thermal images of the body, wherein said thermal images comprise visual information about joint regions of the body, and non-joint regions of the body;
- obtaining enhanced images by preprocessing the thermal images;
- finding keypoints in the enhanced images by applying a corner or blob detector to the entire enhanced images;
- defining a plurality of regions of interest, ROIs, within a predetermined radius range around the keypoints;
- determining an inflammation score of the body in the thermal images by comparing the ROIs with a dataset of training thermal images, wherein each training thermal image represents an a priori known degree of inflammation and has assigned a joint inflammation score.

Advantageously, the corner or blob detector applies one of the following techniques to find the keypoints: Scale Invariant Feature Transform, SIFT, or Features from Accelerated Segment Test, FAST.

More preferably, the method of the invention comprises:
- Acquiring one or more input thermal images with an image acquisition sensor. The thermal images have a bit depth of b bits, which is the number of bits used in their encoding.
- Preprocessing the input thermal images to set their intensity pixel values to a predetermined numerical range to obtain one or more enhanced images. Note that the input thermal images could be provided as raw thermal sensor data (i.e. radiation intensity), as temperatures in Kelvin for each pixel or in colour, so they need to be preprocessed (e.g., by averaging the colour channels of the input thermal image) because the enhanced images are required in grayscale. It is worth remarking that the enhanced thermal images can be set to any bit depth. More preferably, said enhanced thermal images might have a bit depth of 8-bit (thus, the numerical range for the image intensity would be 0-255), 16-bit (corresponding to a numerical range 0 - [2¹⁶-1]) or 32-bit (associated with a numerical range 0 - [2³²-1]).
- Obtaining one or more ROIs of the enhanced images. A circular region with an orientation delimits each ROI. ROIs are defined by three parameters: the ROI center coordinates (keypoint), its size (depending on the radius of the region), and optionally, its orientation (an angle expressed in radians). ROIs are regions in the thermal image with a large variation of intensity in all directions, such as corners or blobs (every blob consists of a group of connected pixels that share a common property, mainly the grayscale value, that differs compared to surrounding regions). The corners or blobs are detected in various sizes using a scale-space filtering. In non-limitative embodiments, blobs are detected by using Laplacian of Gaussian, Difference of Gaussians or Determinant of Hessian methods in a scale-space representation of the image. So, blobs are detected by finding the local maxima or extrema keypoints across the scale and space. In particular embodiments, Taylor series expansion of scale-space is used to get more accurate location of extrema (i.e., if the intensity at these extrema is less than a threshold value, such as 0.03, it is discarded). In other particular embodiments, edges are removed by using a Hessian Matrix to compute the principal curvatures. Particularly, edges are discarded if one eigenvalue is larger than the other (i.e., if this ratio is greater than a threshold, such as 10).

The ROIs are selected by fixing a radius range (between a minimum radius and a maximum radius). In preferred embodiments of the invention, the radius range is defined between 2-30% of the thermal image height and/or width being 2% the minimum radius and 30 % the maximum radius for the ROIs. In even more preferred embodiments, the radius range is defined between 3-15% of the thermal image height and/or width.

A more preferred embodiment of the method further comprises:
- acquiring one or more input visible images obtained with a visible camera, said visible images corresponding to a same field-of-view as the input thermal images.
- preprocessing the visible images to obtain one or more enhanced visible images in grayscale, as the thermal images. More preferably, the bit depth of the visible images is the same as in the thermal images. Otherwise, the bit depth of the visible images is also adapted to the one of the thermal images.

- defining one or more ROIs from the enhanced visible images within a predetermined radius range around the keypoints.
- applying a data fusion algorithm to combine the information of the ROIs obtained from the input thermal images and of the enhanced visible images for determining the inflammation score of the body in the thermal images. In this way, the ROIs obtained by both types of images can be considered, so that the ROIs of the thermal image contain information about the changes in the thermal patterns caused by inflammation and the ROIs of the visible image contain information about redness (a characteristic sign of inflammation) and swelling.

In particular embodiments, the step of obtaining enhanced images by preprocessing the thermal images further comprises at least one of the following operations: noise removal, background removal and/or contrast enhancement (e.g., by means of histogram equalization).

In present invention a feature set is obtained, representative of a joint inflammation from the ROIs obtained in the previous method. The feature set comprises one of the following:
- Directly, the feature set is defined by the scale and rotation invariant descriptors of the ROIs provided by that ROI detection technique (e.g., SIFT).
- Otherwise, the feature set comprises the latent representation (low dimensional vector) of each ROI provided by an autoencoder, preferably a convolutional autoencoder; said neural network comprising an input layer, one or more intermediate layers (including a bottleneck layer) and an output layer; and wherein said neural network is fed at its input layer with the ROIs pixel array to obtain the latent representation in its bottleneck layer (encoded vector). The bottleneck layer is the layer in the middle of the neural network. The autoencoder is configured with a self-supervised machine learning model using training thermal images for which the ROIs have been obtained.

Another object of the invention refers to a device for extracting the local thermal features of one or more input thermal images, from a plurality of ROIs containing information of a joint inflammatory process, which comprises:
- an image acquisition sensor; and
- image processing means (e.g., a computer or other unit comprising hardware/software means for storing and processing the images), configured with a dataset, wherein said dataset contains one or more training thermal images, each training thermal image representing an a priori known degree of inflammation and having assigned a joint inflammation score. Advantageously, the image processing means comprise a non-transitory computer readable medium configured to execute a method according to the first object of the invention.

In preferred embodiments of the device, the image acquisition sensor is an infrared camera. In further preferred embodiments of the device, it further comprises a conventional visible camera synchronized with the image acquisition sensor. Advantageously, by obtaining the same image with the infrared camera and with the visible one it is possible to improve the preprocessing of the image required in the method. For instance, the visible image serves for background subtraction during the preprocessing of the input thermal image. In addition to this, the combination of the feature set obtained from the visible images and from the thermal images can be more representative of inflammatory process.

In a non-limitative embodiment, the image processing means are configured with a database or a supervised machine learning model using a dataset of training thermal images for which the ROIs and the feature set have been obtained, as described before. In these embodiments, an inflammation score has been assigned to each patient sample in the training dataset based on a medical visit in which an ultrasound or a physical exploration of the body region (e.g., hands) is performed.

In a non-limitative embodiment, the image processing means are configured with a database of training thermal images for which the ROIs have been obtained, and wherein the feature set has been obtained from said ROIs (i.e. training feature set). Moreover, the associated inflammation scores of patients are stored in the database together with the training feature set, in order to obtain a plurality of feature inflammation scores from a new feature set through a k-nearest neighbour algorithm. For instance, a number of neighbours k between 3-9 is a proper choice as it simplifies the complexity of the model. As an alternative to k-nearest neighbour algorithm, other instance-based learning algorithms can be applied. Then, by the combination of said feature inflammation scores, a global patient inflammation score is obtained.

In preferred embodiments, the image processing means are configured with a supervised machine learning model which is trained by using the training thermal images for which the ROIs have been obtained.

In non-limitative embodiments, the supervised machine learning model is adapted to be trained by using a machine learning algorithm that receives the features of the dataset and the corresponding inflammation scores of patients representing the severity of the inflammation, to obtain a regression model, in order to estimate the inflammation scores of new features.

Preferably, the regression model is applied to each feature of the one or more input thermal images to obtain a plurality of feature inflammation scores, and it is followed by the combination of said feature inflammation scores to obtain the patient's inflammation score.

In a more preferred embodiment, the image processing means of the device are configured as follows:
- The machine learning model comprises a regression artificial neural network, which comprises an input layer, one or more intermediate layers, and an output layer.
- The output of the machine learning model comprises a neuron which in turn comprises an inflammation score independently for each feature.
- A statistical processing is applied to derive a global inflammation score from the individual inflammation score associated with each feature. For example, the global inflammation score can be obtained by averaging the individual inflammation score derived from each feature.

In a different approach, the supervised machine learning model is adapted to be trained by using a supervised machine learning algorithm that receives the relative frequencies of the dataset and the corresponding joint inflammation scores of patients representing the severity of the inflammation, to obtain a regression model. The relative frequencies of the training dataset are obtained by means of a clustering technique that clusters the features of the dataset in a set of feature clusters. In this embodiment, the method to represent the features of the image (i.e. the relative frequencies of feature clusters) is commonly known as bag of features (inspired in conventional bag-of-words applied in natural language processing).

In a preferred embodiment, the regression model is applied to the relative frequencies of the one or more input thermal images to obtain the patient's inflammation scores, wherein the relative frequencies of the input thermal images are obtained from the feature set of said input thermal images and the set of feature clusters.

In a more preferred embodiment, the regression model comprises an artificial neural network (e.g., a multilayer perceptron), which comprises an input layer, one or more intermediate layers, and an output layer. In those embodiments, the input layer is feed by the relative frequencies of feature clusters while the output layer comprises a neuron modulated by an activation function, said neuron being representative of the global inflammation score assigned to the input thermal images of the patient.

Alternative embodiments of the invention refer to a mobile application (i.e., for Android operative system) configured to execute the aforementioned first and second methods, which can be run in any electronic device, like a smartphone or any other device. Firstly, the thermal image is taken by means of a thermal camera connected to the smartphone that executes the mobile application. Then, those images are sent to a cloud server and they are analyzed in order to determine whether joint inflammation exists and to quantify it according to any of the known parameters in the field, e.g., Disease Activity Score 28 (DAS28), Clinical Disease Activity Index (CDAI) and/or Simplified Disease Activity Index (SDAI) or any other parameter defined ad hoc. Finally, the results are returned to the application and displayed to the end user.

In another alternative embodiments of the device, the images obtained by the conventional visible camera can be processed by the same aforementioned first and second methods in order to additionally evaluate inflammation using local visible patterns. The extracted local visible features can be combined (e.g., via any known data fusion algorithms) with the thermal features obtained with the thermal camera in order to improve the results.

Certain advantageous embodiments of the device further comprise feedback means adapted to generate an alarm when the inflammation score exceeds a predetermined inflammation severity threshold. More particularly, said feedback means comprise hardware or software means configured to provide visual or audio feedback to the user. Preferably, the feedback means are adapted to generate an alarm when the inflammation score assigned to the input thermal image exceeds a predetermined threshold.

### Definitions of relevant terms

In the scope of this patent, a thermal image refers to an image being obtained with a thermal (infrared) camera. However, said image representation does not necessarily comprise an image in a temperature scale and it is not constrained to a particular image model (e.g., it can be a RGB image, HSV image, etc.). The images comprise information about a certain field-of-view, corresponding to a body region (hands or feet) that is represented thereof.

Moreover, the so-called "regions of interest" (ROls) will be understood as characteristic and distinctive regions of the image that potentially contain information about the joint inflammation in the body region considered (feet or hands). Said ROIs comprise a plurality of circular regions of interest, each one defined by three parameters: the key region center coordinates (keypoint), its size (the radius of the region), and its orientation (an angle expressed in radians). Advantageously, the ROI-based approach allows an automated approach for discovering regions with characteristic thermal patterns, which do not rely on a certain set of assumptions, contrary to other known alternatives in the literature that assume thermal patterns must be just in the anatomical site of the joints or in hot spots. In this way, the ROIs approach considers the whole thermal image of the body region, since heat is conducted through the body.

In the proposed invention, the ROIs take into account a wider range of potential indicators for joint inflammation detection. As later detailed, the criteria for detecting regions of interest may involve, for instance: anatomical information (shape, contours, edges, corners, etc.) of the hand and contrast (intensity) variations in the thermal image (temperature patterns). The aforementioned ROIs provide with a method for segmentation of thermal images in order to characterize a joint inflammation disease (e.g., arthritis) more effectively and automatically. Note that said ROIs are not only of thermal nature, but they also comprise anatomical information.

Finally, the inflammation score provided by the invention is understood to be derived from any of the well-known indices applied in rheumatoid arthritis for characterizing the inflammation, and more preferably, Disease Activity Score 28 (DAS28), Clinical Disease Activity Index (CDAI) and/or Simplified Disease Activity Index (SDAI). However, alternatively inflammation scores can be also defined. Such an inflammation score provided by the invention can be normalized to a predetermined range (i.e., 0-1).

Moreover, the "global inflammation score" (i.e., joint inflammation score of the patient) is obtained by applying some statistical processing (averaging, etc.) to the inflammation score corresponding to each of the features extracted from the thermal images in some of the embodiments.

The resolution of an image acquisition sensor is identified by the width and height of the images (in pixels) acquired with it.

Finally, remote patient monitoring or testing (i.e., home testing) is defined as a medical testing outside of a traditional clinical setting. In some aspects of the present disclosure, remote patient monitoring is conducted at the patient's home or a patient's preferred location.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The accompanying drawings comprise specifically the following figures:
Figure 1 corresponds to a diagram of the workflow of the preprocessing of the thermal image.
Figures 2a-2c correspond to the ROIs detection performed in the image of the hands pair. Figure 2a represents the case of the original input thermal image in grayscale, while Figure 2b comprises the enhanced images, which are the result of preprocessing the input images (e.g., by applying contrast enhancement techniques). Figure 2c contains the enhanced images in which the ROIs have been overlaid.
Figure 3 illustrates the k-nearest neighbours-based approach to analyze the ROIs in order to determine the inflammation score for each feature.
Figure 4 represents the embodiment where a multilayer perceptron is trained to analyze the ROIs in order to determine the inflammation score for each feature.
Figure 5 contains a flowchart summarising the steps regarding the embodiment which takes advantage of bag of features approach to train a multilayer perceptron in order to determine the global joint inflammation.

### Numerical references used in the drawings:

| | |
|---|---|
| 1 | Input thermal images of a patient |
| 2 | Preprocessing of input thermal images |
| 3 | Enhanced images obtained after preprocessing |
| 4 | Keypoints (center point of each ROI) |
| 4' | Regions of interest (ROIs) |
| 4" | Radius and orientation characteristic of each ROI |
| 5 | ROI detection technique |
| 6 | Feature extraction technique |
| 7 | Features or feature set (i.e., feature descriptors or, alternatively, latent representations) |
| 7' | Features of the training dataset |
| 7" | Patient degree of joint inflammation of the training dataset |
| 8 | Training phase |
| 9 | Multilayer perceptron |
| 9' | k-nearest neighbours (k-NN) algorithm |
| 10 | Regression model |
| 11 | Prediction phase |
| 12 | Clustering technique (e.g., K-Means) |
| 13 | Feature Clusters |
| 14 | Relative frequencies of feature clusters of a patient |
| 14' | Relative frequencies of feature clusters from the training dataset |
| 15 | Feature inflammation scores (inflammation score of each individual feature) |
| 15' | Patient Inflammation score |

### DETAILED DESCRIPTION OF THE INVENTION

In this section, several non-limitative examples of the method of the invention are provided. We remark that the invention comprises a feature extraction method, which can take into account complex and distinctive patterns potentially more representative of the inflammatory process in comparison with just descriptive statistic features.

The methods of the invention comprise:
- A first method comprises the segmentation of one or more input thermal images (1) and their preprocessing (2) in order to obtain enhanced thermal images (3). Then, it also includes the obtainment of a plurality of keypoints (4) and a plurality of regions of interest (4'), further abbreviated as ROIs (4'), from said enhanced thermal images (3).
- A second method comprises the calculation of feature set representative of the joint inflammation from the ROIs (4') obtained with the first method. Furthermore, it may also comprise the quantitative evaluation of the inflammation from said feature set.

### FIRST METHOD

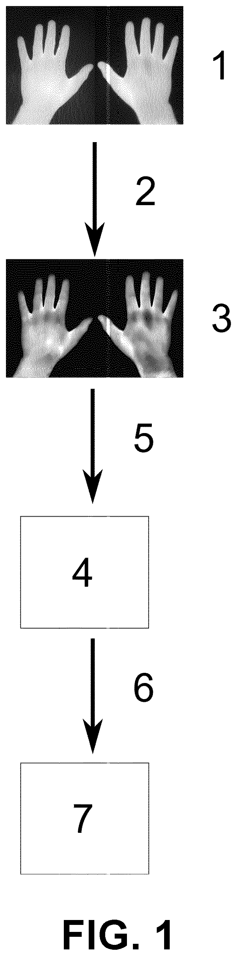

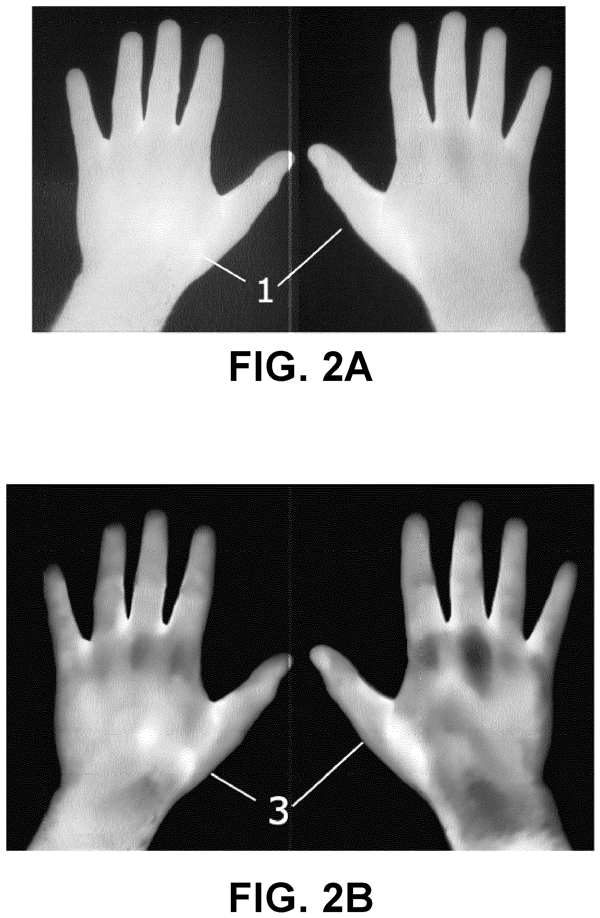

The first method is described in detail below, as illustrated in Figure 1 and Figures 2a-2c for the particular case of arthritis measured from two input thermal images (1), corresponding to the two hands of the patient.

The first method requires at least one input thermal image (1) of a body region of the patient. Preferably, that body regions are the hands or feet. The output is one or more enhanced thermal images (3), and it comprises the preprocessing (2) of one or more thermal images (1) acquired with an IR camera. The one or more input thermal images (1) are not necessarily constraint to any particular temperature scale, so it is not necessary to calibrate the camera for accurate radiometric measurements. Factors that affect the determination of the temperature of the image pixels from the infrared radiation detected by the sensor are, among others, the ambient temperature and the temperature of the chamber. Sometimes the use of a blackbody is recommended when measuring temperatures. Said images do not require having a high resolution and it is enough with a resolution of 160 x 120 pixels. In turn, the preprocessing (2) comprises several operations:
- Normalization of intensity pixel values of the input thermal images (1) to the range 0-255, as in this particular embodiment 8-bit unsigned integer values (uint8 images) is considered. If the image has a different bit depth, it can be accommodated to a different intensity range (in general, [0-2^{b}-1]. This step is recommended to obtain a normalized enhanced image (3).
- Optionally, a noise removal algorithm can be applied to the normalized enhanced image (3), e.g., gaussian blurring, median blurring or non-local means denoising.
- Optionally, performing a background subtraction algorithm over the enhanced thermal image (3). For instance, Otsu's binarization can be applied if the temperature of the body region (hand) is very different from that of the background. Alternatively, a segmentation based on a conventional (visible) image can be applied to determine the hand contours. In that case, not only a thermal camera is required, but also a visible camera acquiring the same image as the thermal one. Regardless of the particular background removal algorithm applied, those image pixels associated with that background must be set to zero value.
- Optionally, enhancing the contrast of the resulting images, for instance, by using global histogram equalization or an adaptative equalization approach (like contrast limited adaptive histogram equalization [CLAHE]).

After performing the previous operations, enhanced thermal images (3) are obtained. An example of these enhanced thermal images (3), in comparison with the original input thermal images (1), is included in Figures 2a-2b.

Next, the regions of interest, or ROIs (4'), must be derived from the enhanced thermal image (3). These ROIs refer to those distinctive regions of the image (3) that are candidates to contain relevant information for inflammation discrimination and quantification. The keypoints (4) are obtained by calculating the maxima and minima of the result of difference of Gaussians function applied in scale space to a series of smoothed and resampled images. Low-contrast candidate points and edge response points along an edge are discarded. Such points usually lie on high-contrast regions of the image, such as object corners and blobs. Said keypoints (4) are defined by certain coordinates in the image, and which in turn define the so-called ROI (4') comprising the circular region around each keypoint (4) and delimited by a radius (4"). A radius is taken around the keypoint (4) location depending on the scale. A range of radii values is fixed (defined as an interval between minimum and maximum radii threshold values), such that the ROIs (4') are characterized by radii values within said range. Then, optionally, an orientation (a prevailing orientation) is assigned to each ROI (4') based on the gradient directions and magnitudes around each keypoint (4). For this, an orientation histogram of gradient magnitudes is created (the 360 degrees are split into 36 bins of 10 degrees each one) and assigning the prevailing orientation to the highest peak. The number of ROIs (4) depends on the capabilities of the hardware device that implements the method. Preferably, the number of ROIs (4') is below 1000, to avoid an excessive computational burden.

Any known ROI detection technique (5) in the field can be applied to determine said keypoints (4) and, subsequently, the ROIs (4'). For instance, in a preferred embodiment of the method, Scale Invariant Feature Transform (SIFT) algorithm is applied to extract keypoints (4). Another embodiment of the ROI detection technique (5) comprises Features from accelerated segment test (FAST) in order to compute the keypoints (4).

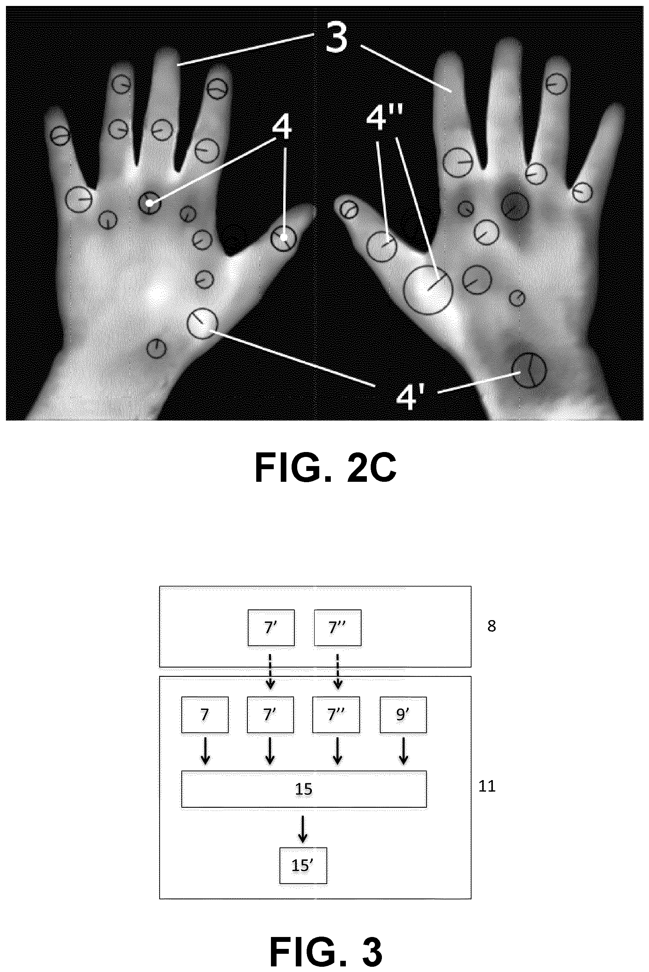

The output of this ROI detection technique (5) is obtained as illustrated in Figure 2c, which comprises a plurality of ROIs (4') detected in a hand image by using a SIFT algorithm as ROI detection technique (5). Particularly, in Figure 2c, it is worth remarking that the different joints of the fingers are included as ROIs (4') but also other parts of the hand.

### SECOND METHOD

The output of the first method is a plurality of ROIs (4') for each input thermal image (1) that is inputted into a second method, as follows. In this way, in the case of hand images for obtaining quantitative information about arthritis, for each patient a feature set corresponding to the two thermal images of the hands is obtained. This second method is assisted by a feature extraction technique (6), preferably machine learning based, and more particularly one of the following:
- The descriptors of each keypoint (4) computed by SIFT (e.g., obtaining vectors of 128 dimensions) can be directly used as feature set, as they are scale and rotation invariant, and hence robust to substantial range of affine distortion, change in viewpoint and/or noise. These features share similar properties with neurons in primary visual cortex in primate vision that are encoding basic forms.
- Alternatively, convolutional autoencoders can be applied to compress the ROIs (4') of the image. Then, the features (7) are obtained in the latent space, further referred to as latent representation, which can be directly used as a feature. This preferred embodiment is shown in Figure 1. In this case, the preferred size of the latent representation in the latent space is one of the following: 32, 64 or 128 dimensions. The autoencoder architecture may comprise several layers (one of them being the input layer). ROI (4') image is rescaled to fit in the input layer, which can be preferably one of the following resolutions: 64x64, 32x32 or 16x16.

The convolutional autoencoder is configured with a self-supervised machine learning model using training thermal images for which the ROIs have been obtained.

Interestingly, note that the feature sets extracted by this method are abstract as they do not represent necessarily a temperature measurement, unlike the feature set considered in previous works known in the field. Advantageously, the new feature sets proposed here involve other kind of visual information of the ROI.

The second method of the invention may also comprise the evaluation of the degree of joint inflammation based on supervised machine learning, as described in detail below. For this method, the input information is the feature set (7) obtained by performing the steps of the first method and the output is a quantitative measurement of joint inflammation of the body region (e.g., hands) of the patient.

At this point, the question is how to discriminate if a certain feature is associated with an inflammation process or not. For this purpose, it is needed to carry out a training phase (8) previously by using a database containing a plurality of training images from which the feature set has been previously extracted according to the method of the first method. Moreover, for each training image in this database, the degree of joint inflammation is known a priori, such that a joint inflammation score has been assigned to each training image based on the evaluation of patient degree (7") of joint inflammation obtained by using other medical imaging techniques, such as ultrasound in Gray Scale and Power Doppler mode, performed by a clinical expert.

In this way, this database of training images serves as a training set for the method. This training phase (8) is followed by a prediction phase (11), in which new test images (different from the training images, and for which the inflammation degree is unknown) are provided to the method in order to determine both their features (7) and patient inflammation score (15'). Three different embodiments of this second method are described below, respectively corresponding to Figures 3-5, wherein all of them comprise the training phase (8) and the prediction phase (11).

### FIRST EMBODIMENT OF THE SECOND METHOD: K-NEAREST NEIGHBOURS APPROACH

In this case, an inflammation score for each feature is calculated by using a k-nearest neighbour algorithm.
a) Training phase (8): The features (7') of the training set and the patient degree (7") of joint inflammation of the training set are stored in a database.
b) Prediction phase (11): From each feature (7) of a new test thermal image (1) to be evaluated, the k-nearest neighbours of the features (7') of the training set are computed using a k-nearest neighbour algorithm (9'). For instance, k value between 3-9 gets good results. Then, a statistical parameter (e.g., the mean, median, range between minimum and maximum, etc.) per feature is computed from the values of the neighbours in order to obtain each feature inflammation score (15). The neighbour values are equivalent to the joint inflammation score of the patient from whom the feature was extracted.

Next, a final statistical parameter (again, it can be a mean, a median, etc.) that is used to derive the patient inflammation score (15') is computed from the two input thermal images (1) of his/her hands (or feet). The patient inflammation score (15') is obtained by combining all the individual feature inflammation scores (15).

Figure 3 details the flow of this first embodiment.

### SECOND EMBODIMENT OF THE SECOND METHOD: REGRESSION MODEL FOR THE INDIVIDUAL FEATURES

a) Training phase (8): In this case, the supervised machine learning model is based on a neural network, particularly a multilayer perceptron (9) which is configured as a regression model (10), which is trained by using the features (7') of the training set. The label of each feature (result to predict) is the value of patient degree (7") of joint inflammation from the training set. The input layer comprises a plurality of neurons equivalent to the dimension of the feature vector (e.g., 128 dimensions in SIFT features). One or more hidden layers with different number of neurons can be applied.
b) Prediction phase (11): Once the regression model (10) is trained, it is applied for each new feature (7) from a new test thermal image to derive the feature inflammation scores (15) corresponding to the inflammation score associated with each individual feature.

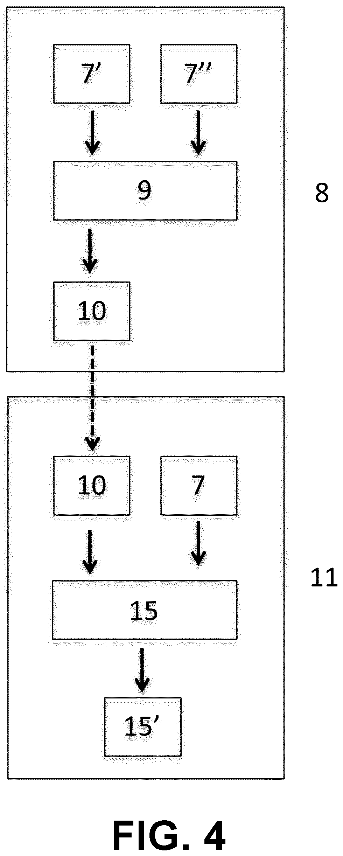

The output layer is a single neuron with a rectified linear unit activation function (ReLU) representing the degree of inflammation associated with each feature. Next, a final statistical parameter (again, it can be a mean, a median, etc.) per feature is computed, which is used to derive a global patient inflammation score (15') from the two input thermal images (1) of his/her hands. Figure 4 summarizes the flow of this second embodiment.

### THIRD EMBODIMENT OF THE SECOND METHOD: REGRESSION MODEL FOR THE BAG-OF-FEATURES

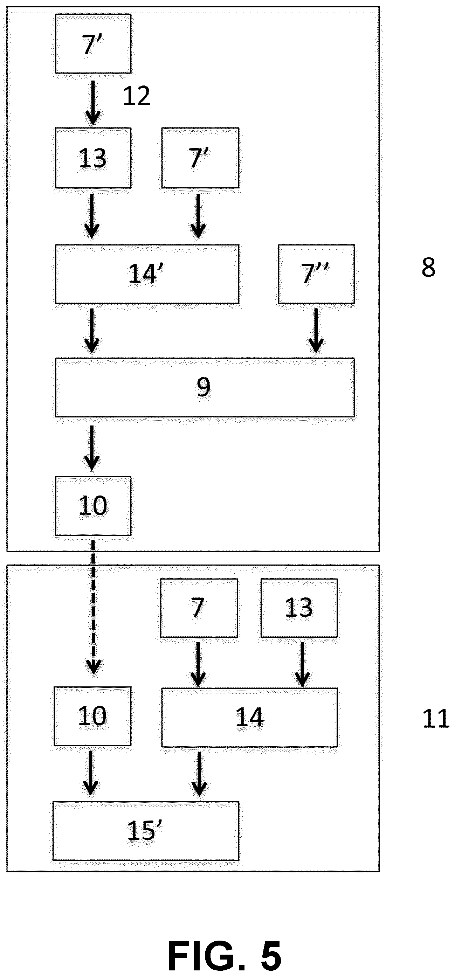

This third embodiment is the one displayed in Figure 5, and it comprises a supervised machine learning model based on a neural network feed with a bag-of-features, as follows:
a) Training phase (8): The first step is to cluster the features (7') of the image training set by using a clustering technique (12), like k-means. The number of resultant feature clusters (13) is moderate (e.g., 50-100 clusters are enough, but it works with other values too). Subsequently, the relative frequencies (14') of feature clusters of the training set are calculated. Later a multilayer perceptron (9) is trained with these relative frequencies as an input layer and the patient degree (7") of joint inflammation of training set as label. One or more hidden layers with different number of neurons can be used. Then, a regression model (10) is generated.
b) Prediction phase (11): For a new patient (represented by the two thermal images (1) of his/her hands), the relative frequencies (14) of feature clusters of the patient are calculated using the extracted features (7) and the defined feature clusters (13). Said vector of occurrence counts of features (7) is known as a bag of features. Then, the patient inflammation score (15') is obtained using the regression model (10) and such relative frequencies (14) of feature clusters.

The output layer of the multilayer perceptron (9) is one neuron with a linear activation function, such as ReLU, which represents the degree of joint inflammation of the patient.

Alternative embodiments of this second method comprise other machine learning based approaches, like support vector machine (SVM) or random forests.

It is worth underlining that in both the first and second embodiments of the second method, even in the training set (database), it is not known whether a certain feature represents an inflammatory condition or not. For this reason, in those cases the global value of inflammation of the body region (e.g. hand) obtained by the examination of the clinical expert is assigned to each feature extracted from the image.

In preferred embodiments of the invention, the training dataset can be enlarged by the new images provided during the testing phase, such that in future executions of the method a larger (thereby, better) dataset is considered.

In a preferred embodiment of the method of the invention, when said method is implemented in a medical user device for remote patient monitoring/testing, it comprises the following modules:
1. Thermal image acquisition means. By acquiring one or more input thermal images (1) of a body region (mainly hands or feet) by means of a thermal camera. For example, a commercial thermal camera Thermal Expert TE-Q1 or a custom device.
2. Image processing means. Storing the thermal images and sending them to another device comprising image processing means. In a particular embodiment, the image processing means comprise a cloud server with storing capabilities. The communication with such a server is performed through a network (WiFi, local area network, etc.).
3. Machine learning model or training database. The thermal images are processed by using machine learning based method comprising the realization of the steps from the two methods, as described above.
4. Returning the results of the machine learning based algorithms back to the device, which is running the method, followed by showing the joint inflammation score to the user device.

The invention is not constrained to a particular programming language or operating system. Furthermore, the cloud processing is not mandatory. The machine learning algorithms that are part of the method can be carried out locally in any electronic device equipped with processing means (e.g., a general-purpose computer processing unit CPU, a graphic processing unit GPU or a microcontroller).

Another object of the invention discloses a device comprising instructions stored on a non-transitory computer readable medium configured to execute the second method described above to perform a joint inflammation evaluation, along with a thermal camera for acquiring the thermal images. Preferably, the device further comprises a graphic user interface (GUI) that allows the user to load the input thermal images (1) and, optionally, to introduce additional input information.

Additional advantages and modifications will readily occur to those skilled in the art. Therefore, the invention in its broader aspects is not limited to the specific details and representative embodiments shown and described herein. Accordingly, various modifications may be made without departing from the scope of the general inventive concept as defined by the appended claims.

## Claims

1. A computer implemented method to obtain a joint inflammatory score (15') of a patient from thermal images (1) of a region of the body of the patient, said method comprising the following steps:
- acquiring one or more input thermal images (1) of a body region of the patient;
- obtaining one or more enhanced images (3) by preprocessing (2) the one or more thermal images (1);
- finding keypoints (4) in the one or more enhanced images (3) by applying a corner or blob detector to the enhanced images (3);
- defining a plurality of regions of interest, ROI (4'), within a predetermined radius (4") range around the keypoints (4);
- determining an inflammatory score (15') for each ROI (4') by using a machine-learning method with a dataset of training thermal images, wherein each training thermal image represents an a priori known degree of inflammation and has assigned a joint inflammation score;
- obtaining the joint inflammatory score (15') by combining the inflammatory scores of each ROI (4');
wherein the corner or blob detector applies one of the following techniques to find the keypoints (4): Scale Invariant Feature Transform, SIFT, or Features from Accelerated Segment Test, FAST.

2. Method according to the preceding claim, wherein the step of obtaining enhanced images (3) by preprocessing (2) the thermal images (1) further comprises at least one of the following operations: noise removal, background removal and/or intensity contrast enhancement.

3. Device to obtain a joint inflammatory score (15') of a patient from thermal images (1) of a region of the body of the patient, said device comprising:
- an image acquisition sensor; and
- image processing means configured to implement the method according to any of the preceding claims.

4. Device according to the preceding claim, wherein the image acquisition sensor is an infrared camera.

5. Device according to any of claims 3-4, wherein the image processing means further comprise a visible camera synchronized with the image acquisition sensor.

6. Device according to any of the preceding claims 3-5, wherein the image processing means are configured with a supervised machine learning model which is trained by using the training thermal images for which the ROIs (4') have been obtained.

7. Device according to the preceding claim, wherein the supervised machine learning model is adapted to be trained by using a supervised machine learning algorithm (9) that receives the features (7') of the dataset and the corresponding inflammation scores of patients (7") representing the severity of the inflammation, to obtain a regression model (10).

8. Device according to claims 3-7, further comprising audio or visual feedback means adapted to generate an alarm when the patient inflammation score (15') assigned to the one or more input thermal images (1) exceeds a predetermined threshold.

## Patentansprüche

1. Computerimplementiertes Verfahren zum Erhalten eines Gelenkentzündungswerts (15') eines Patienten anhand von thermischen Bildern (1) einer Region des Körpers des Patienten, wobei das Verfahren die folgenden Schritte umfasst:
- Erfassen eines oder mehrerer thermischer Eingabebilder (1) einer Körperregion des Patienten;
- Erhalten eines oder mehrerer verbesserter Bilder (3) durch Vorverarbeitung (2) des einen oder der mehreren thermischen Bilder (1);
- Ermitteln von Schlüsselpunkten (4) in dem einen oder den mehreren verbesserten Bildern (3) durch Anwenden eines Eck- oder Blob-Detektors auf die verbesserten Bilder (3);
- Definieren einer Vielzahl von Regionen von Interesse, ROI (4') innerhalb eines vorbestimmten Bereichs des Radius (4") um die Schlüsselpunkte (4) herum;
- Bestimmen eines Entzündungswerts (15') für jede ROI (4') unter Verwendung eines Maschinenlernverfahrens mit einem Datensatz aus thermischen Trainingsbildern, wobei jedes thermische Trainingsbild einen a priori bekannten Entzündungsgrad darstellt und einen Gelenkentzündungswert zugeordnet hat;
- Erhalten des Gelenkentzündungswerts (15') durch Kombinieren der Entzündungswerte jeder ROI (4');
wobei der Eck- oder Blob-Detektor eine der folgenden Techniken anwendet, um die Schlüsselpunkte (4) zu finden: Scale Invariant Feature Transform, SIFT, oder Features from Accelerated Segment Test, FAST.

2. Verfahren nach dem vorhergehenden Anspruch, wobei der Schritt des Erhaltens verbesserter Bilder (3) durch Vorverarbeitung (2) der thermischen Bilder (1) ferner mindestens eine der folgenden Operationen umfasst:
Rauschentfernung, Hintergrundentfernung und/oder Intensitätskontrastverbesserung.

3. Vorrichtung zum Erhalten eines Gelenkentzündungswerts (15') eines Patienten aus thermischen Bildern (1) einer Region des Körpers des Patienten, wobei die Vorrichtung Folgendes umfasst:
- einen Bilderfassungssensor; und
- Bildverarbeitungsmittel, die dazu konfiguriert sind, das Verfahren nach einem der vorhergehenden Ansprüche zu implementieren.

4. Vorrichtung nach dem vorhergehenden Anspruch, wobei der Bilderfassungssensor eine Infrarotkamera ist.

5. Vorrichtung nach einem der Ansprüche 3-4, wobei die Bildverarbeitungsmittel ferner eine mit dem Bilderfassungssensor synchronisierte Sichtkamera umfassen.

6. Vorrichtung nach einem der vorhergehenden Ansprüche 3-5, wobei die Bildverarbeitungsmittel dazu konfiguriert sind, ein überwachtes Maschinenlernmodell zu verwenden, das unter Verwendung der thermischen Trainingsbilder trainiert wurde, für die die ROls (4') erhalten wurden.

7. Vorrichtung nach dem vorhergehenden Anspruch, wobei das überwachte Maschinenlernmodell dazu ausgelegt ist, unter Verwendung eines überwachten Maschinenlernalgorithmus (9) trainiert zu werden, der die Merkmale (7') des Datensatzes und die entsprechenden Entzündungswerte der Patienten (7"), die den Schweregrad der Entzündung darstellen, empfängt, um ein Regressionsmodell (10) zu erhalten.

8. Vorrichtung nach Anspruch 3-7, ferner umfassend Audio- oder visuelle Rückmeldemittel, die dazu ausgelegt sind, einen Alarm zu generieren, wenn der Entzündungswert (15') des Patienten, der dem einen oder den mehreren eingegebenen thermischen Bildern (1) zugeordnet ist, einen vorbestimmten Schwellenwert überschreitet.

## Revendications

1. Procédé mis en œuvre par ordinateur pour obtenir un score inflammatoire articulaire (15') d'un patient à partir d'images thermiques (1) d'une région du corps du patient, ledit procédé comprenant les étapes suivantes :
- acquérir une ou plusieurs images thermiques d'entrée (1) d'une région du corps du patient ;
- obtenir une ou plusieurs images améliorées (3) par prétraitement (2) de la ou des images thermiques (1) ;
- trouver des points clés (4) dans la ou les images améliorées (3) en appliquant un détecteur de coins ou de taches aux images améliorées (3) ;
- définir une pluralité de régions d'intérêt, ROI (4'), dans une plage de rayon prédéterminée (4") autour des points clés (4) ;
- déterminer un score inflammatoire (15') pour chaque ROI (4') en utilisant une méthode d'apprentissage automatique avec un ensemble de données d'images thermiques d'entraînement, dans lequel chaque image thermique d'entraînement représente un degré d'inflammation connu a priori et s'est vu attribuer un score d'inflammation articulaire ;
- obtenir le score inflammatoire articulaire (15') en combinant les scores inflammatoires de chaque ROI (4') ;
dans lequel le détecteur de coins ou de taches applique l'une des techniques suivantes pour trouver les points clés (4) : Scale Invariant Feature Transform, SIFT, ou Features from Accelerated Segment Test, FAST.

2. Procédé selon la revendication précédente, dans lequel l'étape consistant à obtenir des images améliorées (3) par prétraitement (2) des images thermiques (1) comprend en outre au moins l'une des opérations suivantes : suppression du bruit, suppression de l'arrière-plan et/ou amélioration du contraste d'intensité.

3. Dispositif pour obtenir un score inflammatoire articulaire (15') d'un patient à partir d'images thermiques (1) d'une région du corps du patient, ledit dispositif comprenant :
- un capteur d'acquisition d'images ; et
- des moyens de traitement d'images configurés pour mettre en œuvre le procédé selon l'une quelconque des revendications précédentes.

4. Dispositif selon la revendication précédente, dans lequel le capteur d'acquisition d'images est une caméra infrarouge.

5. Dispositif selon l'une quelconque des revendications 3 à 4, dans lequel les moyens de traitement d'images comprennent en outre une caméra visible synchronisée avec le capteur d'acquisition d'images.

6. Dispositif selon l'une quelconque des revendications 3 à 5, dans lequel les moyens de traitement d'images sont configurés avec un modèle d'apprentissage automatique supervisé qui est entraîné en utilisant les images thermiques d'entraînement pour lesquelles les ROI (4') ont été obtenues.

7. Dispositif selon la revendication précédente, dans lequel le modèle d'apprentissage automatique supervisé est adapté pour être entraîné en utilisant un algorithme d'apprentissage automatique supervisé (9) qui reçoit les caractéristiques (7') de l'ensemble de données et les scores d'inflammation correspondants des patients (7") représentant la gravité de l'inflammation, afin d'obtenir un modèle de régression (10).

8. Dispositif selon l'une quelconque des revendications 3 à 7, comprenant en outre des moyens de rétroaction audio ou visuelle adaptés pour générer une alarme lorsque le score d'inflammation du patient (15') attribué à la ou aux images thermiques d'entrée (1) dépasse un seuil prédéterminé.
